(19) Europäisches Patentamt
European Patent Office
Office européen des brevets

(11) **EP 3 081 962 B1**

## (12) FASCICULE DE BREVET EUROPEEN

(45) Date de publication et mention
de la délivrance du brevet:
**16.06.2021 Bulletin 2021/24**

(51) Int Cl.:
***G01S 19/22*** *(2010.01)*     ***G01S 19/30*** *(2010.01)*

(21) Numéro de dépôt: **16163123.9**

(22) Date de dépôt: **31.03.2016**

(54) **DISPOSITIF DE POURSUITE INTÈGRE DE SIGNAUX GNSS**

VORRICHTUNG ZUR INTEGRIERTEN VERFOLGUNG VON GNSS-SIGNALEN

DEVICE FOR INTEGRAL TRACKING OF GNSS SIGNALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.04.2015 FR 1553315**

(43) Date de publication de la demande:
**19.10.2016 Bulletin 2016/42**

(73) Titulaires:
- **Centre National d'Etudes Spatiales**
  **75039 Paris Cedex 01 (FR)**
- **M3 Systems**
  **31410 Lavernose-Lacasse (FR)**
- **Institut Supérieur de l'Aéronautique**
  **et de l'Espace**
  **31055 Toulouse Cedex 4 (FR)**

(72) Inventeurs:
- **RIES, Lionel**
  **81290 Vivier les Montagnes (FR)**
- **VIGNEAU, Willy**
  **31600 Muret (FR)**
- **De Boer, Jean-Rémi**
  **31450 Donneville (FR)**
- **Bidon, Stéphanie**
  **31500 Toulouse (FR)**
- **Calmettes, Vincent**
  **31500 Toulouse (FR)**

(74) Mandataire: **Delorme, Nicolas et al**
**Cabinet Germain & Maureau**
**12, rue Boileau**
**BP 6153**
**69466 Lyon Cedex 06 (FR)**

(56) Documents cités:
**CN-A- 103 809 191**

- **FERNANDEZ-PRADES CARLES ET AL: "Assisted GNSS in LTE-Advanced Networks and its Application to Vector Tracking Loops", GNSS 2012 - PROCEEDINGS OF THE 25TH INTERNATIONAL TECHNICAL MEETING OF THE SATELLITE DIVISION OF THE INSTITUTE OF NAVIGATION (ION GNSS 2012), THE INSTITUTE OF NAVIGATION, 8551 RIXLEW LANE SUITE 360 MANASSAS, VA 20109, USA, 21 septembre 2012 (2012-09-21), pages 1462-1476, XP056008460,**
- **HSU L-T ET AL: "Assessment of the Multipath Mitigation Effect of Vector Tracking in an Urban Environment", PNT 2013 - PROCEEDINGS OF THE ION 2013 PACIFIC PNT MEETING, THE INSTITUTE OF NAVIGATION, 8551 RIXLEW LANE SUITE 360 MANASSAS, VA 20109, USA, 25 avril 2013 (2013-04-25), pages 498-509, XP056008209,**

## Description

### Domaine Technique

De manière générale, la présente invention concerne le domaine de la radionavigation, en particulier un dispositif de poursuite intègre de signaux de radionavigation par satellite, appelés également « signaux GNSS » (du terme anglais Global Navigation Satellite System) par la suite. Plus précisément, l'invention propose un récepteur de signaux de radionavigation (ou « récepteur GNSS ») particulièrement adapté aux environnements caractérisés par la présence de multi-trajets.

### Arrière-plan technologique

L'invention adresse la problématique de la poursuite intègre de signaux GNSS dans des environnements « difficiles » en termes de multi-trajets. Le problème se pose surtout en milieu urbain. Il y a plusieurs raisons pour cela. D'abord, la topographie des villes et des agglomérations favorise l'occurrence de multi-trajets et de masquage de satellites, notamment à cause des façades verticales en bordure des espaces fréquentés par les utilisateurs des GNSS. (On parle de « canyons » urbains.) Ensuite, le plus grand nombre d'utilisateurs de GNSS (comme p.ex. GPS, GLONASS, COMPASS et GALILEO) se trouve en milieu urbain. Et finalement, la densité des chemins empruntables fait qu'une erreur de positionnement peut facilement se répercuter au niveau du navigateur et être perceptible par l'utilisateur. Parmi les problèmes les plus fréquents, on peut notamment citer les longues durées d'initialisation, la perte des signaux (le masquage des satellites), le positionnement erroné dans une rue parallèle ou encore les sauts erratiques entre plusieurs positions.

Les problèmes posés par ce type d'environnement sont principalement 1) la présence de multi-trajets et 2) le masquage des signaux LOS (c.-à-d. des signaux reçus de satellites qui ne sont pas en ligne de vue directe ; LOS étant l'acronyme du terme anglais « line-of-sight »). Au lieu de multi-trajets, on parle également de la présence de signaux NLOS (« non-line-of-sight »).

Différentes stratégies existent pour assurer la détection des multi-trajets. Le brevet US 5 917 445 propose un test de détection de multi-trajets qui combine des mesures de la phase porteuse et des pseudo-distances réalisées avec plusieurs antennes GNSS espacées entre elles. L'ensemble des mesures disponibles est hautement redondant en cas de fonctionnement normal. Si un multi-trajet est détecté pour un signal particulier, les mesures en rapport avec ce signal ne sont pas prises en considération pour le positionnement. Cette solution nécessitant plusieurs antennes et des traitements indépendants des différents signaux reçus, elle n'est pas applicable aux récepteurs GNSS destinés au grand public.

L'article de M. Irsigler et G. W. Hein, Development of a Real-Time Multipath Monitor Based on Multi-Correlator Observations, Proceedings of the 18th International Technical Meeting of the Satellite Division of the Institute of Navigation, ION GNSS 2005, propose une méthode de détection des multi-trajets basée sur l'observation de la forme du pic de corrélation. Plusieurs points de corrélation sont mesurés et à partir de ceux-ci divers métriques sont établis. Pour chacune de ces métriques un test de détection est mis en place pour vérifier si cette dernière s'écarte trop de sa valeur théorique obtenue en absence de multi-trajets.

L'article de O. M. Mubarak et A. G. Dempster, Exclusion of Multipath-Affected Satellites Using Early Late Phase, Journal of Global Positioning System, 2010, Vol. 9, No.2 :145-155, propose un test de détection de multi-trajets utilisant la différence de phase des points de corrélation « Early » (en avance) et « Late » (en retard), nommée ELP (« Early Late Phase »). Le test utilise les voies I et Q des corrélateurs et suppose que la mesure ELP a une amplitude non-nulle en présence de multi-trajets.

Les signaux de radionavigation émis par des satellites (ou pseudolites) d'un système de positionnement se présentent sous la forme d'une porteuse modulée par une forme d'onde d'étalement contenant un code binaire pseudo-aléatoire. La modulation de la porteuse provoquant l'étalement du spectre autour de la fréquence de la porteuse, les signaux de radionavigation sont souvent appelés « en spectre étalé ». Les codes pseudo-aléatoires représentent un identificateur du signal et donc du satellite émetteur. Connus des récepteurs, ils permettent à ceux-ci un Accès Multiple à Répartition de Code (AMRC). Certains signaux de positionnement par satellites transportent en outre des données utiles (p. ex. le message de navigation) sous forme d'une séquence binaire (à rythme nettement moins élevé que le code pseudo-aléatoire) modulée en plus sur la porteuse.

La réception d'un signal de radionavigation comprend sa démodulation à l'aide d'une réplique de la porteuse générée dans le récepteur par un oscillateur piloté par une boucle de poursuite de porteuse (ou boucle de poursuite de phase) et d'une réplique de la forme d'onde d'étalement (ou réplique de code) produite par un générateur de forme d'onde piloté par une boucle de poursuite de code. Le signal d'écart de phase entre la porteuse du signal entrant et la réplique de porteuse produit à chaque pas de temps fournit une première observable (l'observable de phase). Le signal de décalage temporel entre la forme d'onde d'étalement du signal entrant et la réplique de code produit à chaque pas de temps représente une deuxième observable (l'observable de code). Les observables de phase et de code sont ensuite utilisées pour estimer la pseudo-distance et la delta-distance (en anglais « delta range »). Une delta-distance équivaut à une estimation indépendante de la dérivée de la pseudo-distance correspondante. Les étapes sont réalisées en parallèle sur les différents canaux du récepteur pour les différents signaux. L'ensemble des pseudo-distances et des delta-distances sont ensuite amenées dans le navigateur qui les combine et en dérive une estimation de la position, de la vitesse, du temps, etc.

Dans une architecture classique, appelée « scalaire », la navigation (détermination de la position, de la vitesse et du temps) intervient en aval de la poursuite des signaux et les boucles de poursuite de code et/ou de porteuse des différents canaux de poursuite sont indépendantes entre elles. Dans une architecture « vectorielle », la solution de positionnement du navigateur est utilisée dans les boucles de poursuite. En d'autres termes, les répliques de code ou de phase sont synchronisées avec le signal entrant sur la base de la solution de positionnement du navigateur : la navigation est partie intégrante de la poursuite. Des explications sur le fonctionnement d'une boucle de poursuite de code vectorielle peuvent être trouvées dans l'article « Vector Delay Lock Loops », Matthew Lashley et al., InsideGNSS, Septembre/Octobre 2012, pp. 28-34.

L'article de Matthew Lashley et David M. Bevly, "Comparison in the Performance of the Vector Delay/Frequency Lock Loop and Equivalent Scalar Tracking Loops in Dense Foliage and Urban Canyon," Proceedings of the 24th International Technical Meeting of The Satellite Division of the Institute of Navigation (ION GNSS 2011), Portland, OR, September 2011, pp. 1786-1803, compare de manière empirique les performances des architectures de poursuite scalaire et vectorielle. L'avantage est donné à l'architecture vectorielle, à cause de sa plus grande robustesse au masquage et donc d'une plus grande disponibilité d'une solution de navigation. On constate toutefois que la boucle de poursuite vectorielle a également des difficultés dans des environnements urbains.

Un inconvénient d'une boucle vectorielle est qu'un canal de poursuite corrompu est susceptible de contaminer les autres canaux via le navigateur. Une telle contamination est exclue dans une architecture scalaire, au prix d'une moins grande disponibilité. La demande de brevet CN 103809191 et l'article C. Fernandez-Prades, et al. : « Assisted GNSS in LTE-Advanced Networks and its Application to Vector Tracking Loops, » GNSS 2012 - Proceedings of the 25th international meeting of the satellite division of the institute of navigation (ION GNSS 2012), 21 septembre 2012, pp. 1462-1476, décrivent des architectures de récepteur GNSS capables de commuter l'ensemble des canaux de poursuite entre un mode de poursuite scalaire et un mode de poursuite vectorielle.

## Description générale de l'invention

Selon un premier aspect de l'invention, il est proposé un récepteur de signaux de radionavigation (« récepteur GNSS »), comprenant :

- ◦ un étage RF pour produire un signal entrant numérique;
- ◦ plusieurs canaux de poursuite configurés pour fournir des mesures relatives à un signal de radionavigation, les canaux comprenant chacun respectivement:

  - • un générateur de répliques de code configuré pour produire des répliques du code du signal de radionavigation poursuivi par le canal respectif ;

  - • un module de corrélation configuré pour produire des corrélations entre le signal entrant et les répliques de code ;

  - • une boucle à verrouillage de retard de code de type scalaire configurée pour piloter le générateur de répliques de code en vue de synchroniser les répliques de code avec le signal entrant ;

- ◦ un navigateur alimenté par les canaux de poursuite, configuré pour calculer une solution de navigation sur la base des mesures réalisées par les canaux de poursuite ;
- ◦ une boucle à verrouillage de retard de code de type vectoriel, alimentée par le navigateur et configurée pour piloter les générateurs de répliques de code en vue de synchroniser les répliques de code avec le signal entrant ; et
- ◦ un moniteur configuré pour commuter individuellement les canaux de poursuite entre la boucle à verrouillage de retard de code de type vectoriel et la boucle à verrouillage de retard de code de type scalaire respective ;

chaque canal comprend un détecteur de multi-trajet et le moniteur est configuré pour commuter le canal de poursuite en fonction du résultat du détecteur de multi-trajet.

Un récepteur selon le premier aspect de l'invention est donc capable de commuter entre une poursuite scalaire et une poursuite vectorielle. Il sera apprécié que le mode vectoriel facilite la poursuite en présence de masquage et la détection de multi-trajets.

Grâce à cette configuration, certains canaux peuvent opérer en mode de poursuite scalaire pendant que d'autres fonctionnent en mode de poursuite vectorielle. Il est ainsi possible de poursuivre certains signaux en mode scalaire, lequel est le mode de poursuite avantageux en cas de signal LOS pas ou seulement faiblement affecté de multi-trajet. En même temps, d'autres signaux peuvent être poursuivis en mode vectoriel, ce qui permet au récepteur d'assurer un meilleur accrochage de ces signaux dans des conditions environnementales difficiles (en forêt, en agglomération, etc.)

Il est alors possible de passer un canal de poursuite en mode vectoriel si la présence de multi-trajet est détectée sur ce canal. Grâce à la poursuite vectorielle, le risque de décrochage est réduit. Le canal peut être maintenu en vie (plus longtemps) dans des circonstances difficiles, ce qui augmente la disponibilité du signal de radionavigation respectif et diminue la fréquence des phases d'acquisition du signal. Les mesures réalisées sur un canal maintenu en vie par la boucle vectorielle peuvent être marquées comme contaminées ou non fiables. Ce mode facilite par ailleurs la détection de ces mesures contaminées. Le navigateur peut être configuré de sorte à ne pas tenir compte de telles mesures pour la détermination de la solution de navigation. De préférence, chaque canal estime la puissance du bruit sur ses mesures, qui peut servir d'indication de la qualité des mesures. Une mesure contaminée sera affectée d'un bruit de mesure très élevée (voire infinie). De préférence, le navigateur applique à chaque mesure une pondération dépendante de la précision. De cette manière, une mesure contaminée ne contribuera pas ou seulement peu à la solution de navigation.

Le détecteur de multi-trajet peut être configuré pour décider entre la présence et l'absence de multi-trajet sur la base d'un ou de plusieurs tests statistiques.

De préférence, le détecteur de multi-trajet est configuré pour décider entre la présence et l'absence de multi-trajet sur la base d'un premier test statistique lorsque le canal de poursuite respectif est commuté sur la boucle à verrouillage de retard de code de type scalaire et sur la base d'un second test statistique lorsque le canal de poursuite respectif est commuté sur la boucle à verrouillage de retard de code de type vectoriel.

De préférence, la présence de multi-trajet est détectée, selon le premier test statistique, si :

$$\frac{\bar{Q}^2}{\widehat{\sigma_1^2}} > \ \eta_1$$

où $\bar{Q}$ est la valeur moyenne de la différence entre la voie (de corrélation) en quadrature en avance et la voie en quadrature en retard calculée pour un temps d'observation, $\widehat{\sigma_1^2}$ est une estimée de la variance de ladite différence pour ce temps d'observation et $\eta_1$ est le seuil de détection du premier test.

Selon le second test statistique, la présence de multi-trajet est de préférence détectée si :

$$\frac{|\overline{EmL}|^2}{\widehat{\sigma_2^2}} > \ \eta_2$$

où *EmL* est la valeur moyenne de la différence entre la voie complexe en avance et la voie complexe en retard calculée pour un temps d'observation, $\widehat{\sigma_2^2}$ est une estimée de la variance de cette différence pour ce temps d'observation et $\eta_2$ est le seuil de détection du second test. Par « voie complexe », on entend la somme (I + jQ) de la voie en phase I et de la voie en quadrature Q multipliée par j, où $j^2 = -1$.

Selon un mode de réalisation préféré de l'invention, chaque canal comprend un détecteur de masquage (ou détecteur LOS) pour détecter si le signal poursuivi par le canal respectif est un signal LOS (c.-à-d. un signal n'ayant pas subi de réflexion sur son trajet entre l'émetteur et le récepteur). De préférence, le moniteur est configuré pour commuter individuellement les canaux de poursuite entre la boucle à verrouillage de retard de code de type vectoriel et la boucle à verrouillage de retard de code de type scalaire respectives en fonction du résultat de détection du détecteur de masquage.

Selon une configuration particulièrement préférée de l'invention, le récepteur GNSS dispose aussi bien d'un détecteur de multi-trajet que d'un détecteur de masquage, le moniteur étant configuré pour commuter individuellement les canaux de poursuite entre la boucle à verrouillage de retard de code de type vectoriel et la boucle à verrouillage de retard de code de type scalaire respective en fonction des résultats du détecteur de masquage et du détecteur de multi-trajet.

Selon un mode de réalisation avantageux de l'invention, chaque canal de poursuite comprend en outre :

    ◦ un générateur de porteuse locale configuré pour produire une porteuse locale et pour injecter celle-ci dans le module de corrélation ; et

◦ une boucle à verrouillage de phase de porteuse (également : « boucle de porteuse » ou « boucle de phase ») configurée pour piloter le générateur de porteuse locale en vue de synchroniser la porteuse locale avec le signal de radionavigation.

De préférence, la boucle de verrouillage de phase est configurée de sorte à opérer en mode autonome (ou « scalaire ») si le résultat de détection du détecteur de masquage indique que le signal poursuivi par le canal respectif est un signal LOS et en mode de fréquence aidée par le navigateur (mode « vectoriel » pour lequel l'erreur statique est mesurée localement par un discriminateur de phase) si le résultat de détection du détecteur de masquage indique que le signal poursuivi par le canal respectif est un signal non LOS (« NLOS »).

Selon une configuration hautement préférée du récepteur, le moniteur place les boucles de code et de phase de chaque canal de poursuite dans les modes scalaire ou vectoriel comme indiqué par le tableau ci-dessous :

| Signal LOS? | Multi-trajet présent? | | Boucle de code | Boucle de phase |
|---|---|---|---|---|
| Oui | Non | → | Mode scalaire | Mode scalaire |
| Non | / | → | Mode vectoriel | Mode vectoriel |
| Oui | Oui | → | Mode vectoriel | Mode scalaire |

**Brève description des dessins**

D'autres particularités et caractéristiques de l'invention ressortiront de la description détaillée d'un mode de réalisation avantageux présenté ci-dessous, à titre d'illustration, avec référence aux dessins annexés qui montrent :

Fig. 1: une illustration très schématique d'un récepteur GNSS selon mode de réalisation avantageux de l'invention ;

Fig. 2: une illustration plus détaillée d'un canal de poursuite du récepteur de la figure 1 ;

Fig. 3: une constellation de satellites GNSS, utilisée dans le cadre de simulations de scénarios ;

Fig. 4: une trajectoire d'un récepteur considérée dans les simulations ;

Fig. 5: une illustration d'un multi-trajet en présence du signal LOS correspondant ;

Fig. 6: des graphes illustrant l'impact d'un multi-trajet sur le point EmL d'un récepteur en mode scalaire (STL) ou vectoriel (VTL) pour une différence de phase $\delta\varphi$ = 0 entre le multi-trajet et le signal LOS ;

Fig. 7: des graphes illustrant l'impact d'un multi-trajet sur le point EmL d'un récepteur en mode scalaire (STL) ou vectoriel (VTL) pour une différence de phase $\delta\varphi$ = 0,25 *cycle* entre le multi-trajet et le signal LOS ;

Fig. 8: un graphe montrant l'estimée de la fréquence du signal LOS délivrée par le détecteur de masquage ;

Fig. 9: des graphes illustrant l'impact d'un multi-trajet sur le point EmL d'un récepteur en mode scalaire (STL) ou vectoriel (VTL), le multi-trajet étant décalé en fréquence par rapport au signal LOS ;

Fig. 10: un filtre adaptatif à deux cellules d'ordre 1 en cascade pour la détection du signal LOS ;

Fig. 11: des graphes montrant l'estimée de la fréquence du signal LOS délivrée par le détecteur de masquage (en haut) et l'estimée du décalage en fréquence du multi-trajet (en bas.)

**Description détaillée d'un mode de réalisation préféré de l'invention**

L'objet de ce mode de réalisation préféré est la poursuite intègre des signaux dans des environnements urbains. Les problèmes posés par ce type d'environnement sont, principalement : 1) la présence de multi-trajets et 2) le masquage du signal LOS.

Les multi-trajets peuvent être classés en deux grandes catégories :

◦ Les trajets diffus, étalés dans le domaine des fréquences qui affectent la qualité du signal reçu. Ils se répercutent au niveau du récepteur dans une dégradation du rapport signal sur densité spectrale de bruit (rapport « $C/N_0$ »).

◦ Les trajets spéculaires, qui sont caractérisés par une puissance localisée en fréquence et qui produisent un biais sur les mesures lorsque la fréquence de ces multi-trajets reste dans la bande du récepteur. Ce problème est particulièrement important pour des récepteurs à position fixe ou des récepteurs se déplaçant parallèlement à la surface qui réfléchit les multi-trajets.

L'invention utilise une architecture de poursuite adaptative. Plus particulièrement, les canaux de poursuite peuvent être commutés entre un mode de poursuite scalaire et un mode de fonctionnement vectoriel, en fonction de la présence de multi-trajet et/ou de l'absence d'un signal LOS.

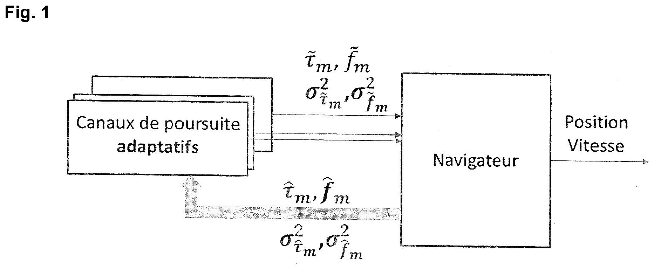

La figure 1 illustre le mode de réalisation préféré de l'invention de manière très schématique. Les canaux de poursuite délivrent les délais de propagation, notés $\tilde{\tau}_m$ (l'indice m indique le satellite ou le signal de radionavigation concerné), et les fréquences Doppler, notées $\tilde{f}_m$, des signaux reçus, permettant de construire des mesures communément appelées pseudo-distances et delta-distances, utilisées par le navigateur comme observations de la position et de la vitesse, respectivement.

Sur la figure 1 et dans la suite du document, les estimées des canaux sont identifiées par un « ~ », alors que les estimées du navigateur sont identifiées par un « ^ ».

La poursuite est adaptative canal par canal, pouvant s'effectuer en mode scalaire ou en mode vectoriel. Un diagnostic de l'état du signal entrant est réalisé (monitoring des signaux de post-corrélation et des sorties des discriminateurs).

Le navigateur élabore, à partir des informations sur le mouvement des satellites (position et vitesse des satellites) et de la connaissance de la position et de la vitesse de l'antenne du récepteur, des estimées du délai de propagation $\tilde{\tau}_m$ et de la fréquence Doppler $\tilde{f}_m$. Ces estimées sont utilisées au niveau des canaux de poursuite dans le mode vectoriel, rendant la poursuite dépendante de l'état du navigateur, et donc des autres canaux, voire d'autres mesures exploitées par le navigateur (c.-à-d. des mesures de capteurs complémentaires comme, p.ex., des mesures inertielles). Le navigateur délivre aussi la puissance des bruits sur ces estimées $\sigma_{\hat{\tau}_m}^2$, $\sigma_{\hat{f}_m}^2$. Ces paramètres permettent de contrôler les seuils des tests réalisés dans le canal de poursuite pour définir le mode de fonctionnement de ce canal. La puissance du bruit en fréquence $\sigma_{\hat{f}_m}^2$ permet également de contrôler les bandes de bruit du canal de poursuite m. Il est à noter que des capteurs complémentaires utilisés par le navigateur pour réduire la puissance du bruit de fréquence permettent une réduction de la bande facilitant le filtrage de certains multi-trajets, en particulier lorsque l'erreur de fréquence de l'oscillateur reste faible.

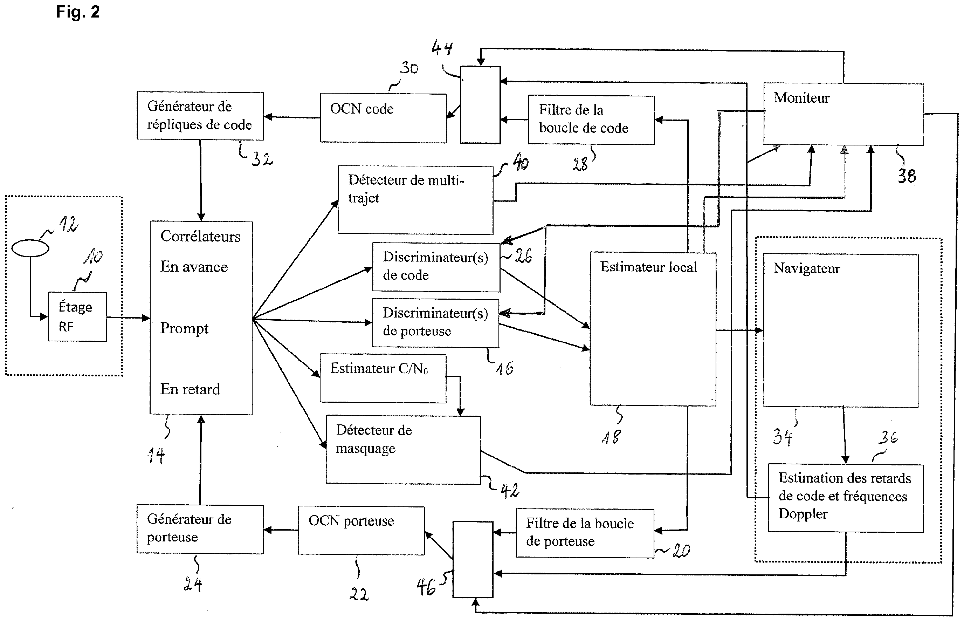

La figure 2 est une illustration plus détaillée d'un canal de poursuite selon le mode de réalisation préféré de l'invention. Les boîtes tracées en lignes pointillées indiquent les composants qui sont partagés par tous les canaux. Un étage RF (en anglais « RF front end ») 10, connecté à l'antenne 12 transpose le signal entrant en fréquence et le convertit en un signal numérique. Le signal reçu est ensuite entré dans un ensemble de corrélateurs 14, qui corrèlent le signal entrant avec des répliques internes du signal de radionavigation.

Chaque canal comprend une boucle de poursuite de code et une boucle de poursuite de porteuse.

La boucle de poursuite de porteuse est alimentée par un discriminateur de porteuse 16, qui fournit, via l'estimateur local 18 et un filtre de boucle de porteuse 20, en fonction des valeurs de corrélation, un signal d'asservissement de porteuse, à un oscillateur à commande numérique (OCN) 22. Celui-ci fournit un signal de synchronisation au générateur de réplique de porteuse 24 qui produit la réplique de porteuse pour les corrélateurs 14.

La boucle de poursuite de code est alimentée par un discriminateur de code 26, qui fournit, via l'estimateur local 18 et un filtre de boucle de code 28, en fonction des valeurs de corrélation, un signal d'asservissement de code gouvernant les écarts temporels entre les répliques de code et le signal entrant, à un OCN 30. Celui-ci fournit un signal de synchronisation au générateur de réplique de code 32 qui produit les répliques de code pour les corrélateurs 14.

L'estimateur local 18 calcule les délais de propagation $\tilde{\tau}_m$, les fréquences Doppler $\tilde{f}_m$, ainsi qu'une une information de qualité de ceux-ci, notamment les variances estimées respectives $\sigma_{\tilde{\tau}_m}^2$ et $\sigma_{\tilde{f}_m}^2$. L'estimateur local 18 calcule en outre les pseudo-distances et delta-distances, qui sont collectées par le navigateur 34 pour tous les canaux de poursuite. Le navigateur 34 estime sur cette base la solution de navigation, qui comprend typiquement la position, la vitesse et le temps du récepteur.

Le récepteur selon le mode de réalisation préféré de l'invention comprend en outre une boucle de code vectorielle et une boucle de porteuse vectorielle sur chaque canal de poursuite. Il est rappelé que l'on parle de boucle de porteuse vectorielle lorsque la fréquence est estimée par le navigateur, même si l'erreur statique est mesurée localement (c.-à-d. au niveau de chaque canal) par un discriminateur de phase.

Le mode scalaire est le mode de poursuite adopté dans les récepteurs conventionnels. Dans ce mode, les OCNs qui produisent les répliques de code et de porteuse sont contrôlés par l'estimateur local 18. La poursuite du signal délivré par un satellite est dont réalisée de manière isolée sur le canal respectif. La poursuite ne bénéficie pas des informations élaborées par le navigateur, ces informations étant bénéfiques lorsque le navigateur dispose de mesures intègres mais pouvant être pénalisantes lorsque le navigateur utilise une ou plusieurs mesures contaminées.

S'agissant du mode vectoriel adopté pour la boucle de code, le ou les OCNs 30 qui contrôlent la production des répliques de code en avance (ou Early), prompt et en retard (ou Late) sont totalement contrôlés par le navigateur. La fréquence est déduite de la vitesse du récepteur, projetée dans l'axe du satellite adressé. L'erreur statique (ou erreur de trainage) de délai est obtenue à partir de la position du récepteur qui est comparée à l'information de position représentée par la sortie du NCO du générateur de code.

S'agissant du mode vectoriel adopté pour la boucle de phase, l'OCN 22 qui contrôle la production de la réplique de porteuse est contrôlé par le navigateur et par la sortie du discriminateur de phase. La fréquence est déduite de la vitesse du récepteur, projetée dans l'axe du satellite adressé. L'erreur statique de phase est délivrée par le discriminateur de phase. On parle également de boucle « aidée par le navigateur ».

Le navigateur 34 comprend un module 36 (estimateur global) qui estime, sur la base de la solution de navigation et des informations sur la trajectoire des satellites (éphémérides), les délais de propagation $\tilde{\tau}_m$, les fréquences Doppler $\tilde{f}_m$, ainsi variances respectives $\sigma_{\tilde{\tau}_m}^2$ et $\sigma_{\hat{f}_m}^2$. Lorsque le canal de poursuite m est mis en mode vectoriel en ce qui concerne la poursuite du code, l'OCN de code 30 est contrôlé par l'estimée $\tilde{\tau}_m$ (en provenance du navigateur) au lieu de l'estimée $\tilde{\tau}_m$ (en provenance de l'estimateur local). Si le canal de poursuite m est mis en mode vectoriel (ou en mode aidé en fréquence) en ce qui concerne la poursuite de la porteuse, l'OCN de porteuse 22 est contrôlé par l'estimée $\tilde{f}_m$ en provenance du navigateur (au lieu de l'estimée $\tilde{f}_m$ en provenance de l'estimateur local). Un bloc de contrôle, appelé ici moniteur 38, sélectionne le mode de poursuite de la boucle de code et de la boucle de phase du canal respectif.

La sélection appliquée par le moniteur 38 se fait principalement sur la base des sorties d'un détecteur de multi-trajet 40 et d'un détecteur de masquage 42.

**Détection de masquage**

La détection de masquage ou d'absence de signal LOS se fait par une analyse temps/fréquence du trajet direct. Une analyse du signal de postcorrélation permet de caractériser le signal entrant. Cette caractérisation permet de statuer sur la dynamique du récepteur, la dégradation du rapport C/N$_0$ de par la présence de signaux d'interférence, et la qualité du signal reçu à la fréquence du signal LOS.

Une mesure de la puissance du signal à la fréquence du signal LOS permet de mesurer la qualité du signal reçu. Une valeur anormalement forte de la puissance dans une bande étroite autour de la fréquence du signal LOS indique des interférences constructives alors qu'une valeur faible relève d'une atténuation ou d'un masquage du signal LOS, ou de la présence d'interférences destructives.

En l'absence de multi-trajets à la fréquence du signal LOS, une mesure de la puissance du signal dans la bande du signal LOS associée à une mesure de la puissance totale permet également de déterminer le rapport signal à bruit plus interférences, $C/(N_0 + N_I)$.

Pour la détection du masquage, on peut analyser le signal de sortie du corrélateur prompt (noté « x » dans la suite) dans le domaine des fréquences. Une première mise en œuvre du détecteur de masquage comprendrait donc un bloc de FFT fournissant la transformée de Fourier de la grandeur x. La taille de la FFT serait d'au moins 128, pesant sur la complexité hardware du récepteur.

Une autre solution, considérée plus avantageuse, pour la détection du masquage utilise un filtre adaptatif à bande étroite de faible complexité, à un zéro et un pôle (voir V. Calmettes et al. « Techniques d'adoucissement de spectre pour récepteur à spectre étalé », 18° Colloque sur le traitement du signal et des images, 2001 ; p. 1152-1155). Ce filtre, utilisant un algorithme adaptatif scalaire, permet de poursuivre efficacement la fréquence du signal LOS, c'est-à-dire de caler la fréquence centrale du filtre sur celle du signal LOS. Ce filtre est obtenu par la mise en cascade d'un filtre à un pôle et d'un filtre à un zéro. Le filtre tout pôle réalise une amplification du signal LOS pour améliorer le rapport signal en bruit en sortie du filtre. La sortie de ce filtre alimente un filtre adaptatif tout zéro qui délivre une estimation de la fréquence du signal LOS. Les bonnes performances de l'étage adaptatif découlent de la qualité du signal délivré par la structure tout pôle.

Cette approche se base sur une modélisation autorégressive du signal x :

$$x(nT_{cor}) = -\sum_{k=1}^{p} a_k x\big((n-k)T_{cor}\big) + b(n),$$

où $T_{cor}$ est le temps de corrélation cohérente, n l'indice de temps, *b(n)* un bruit qui est supposé blanc, centré, de loi de densité gaussienne, et les $a_k$, k = 1,..., p des coefficients. En notant X(z) et B(z) les transformées en z de x et de b, respectivement, on obtient :

$$X(z)\Big/B(z) = 1\Big/1 + \sum_{k=1}^{p} a_k z^{-k}$$

Le signal est ainsi modélisé par un bruit blanc filtré par un filtre « tout pôles ». Le lieu des pôles permet de localiser l'énergie du signal de sortie du corrélateur dans le domaine des fréquences. Lors du fonctionnement nominal, cette énergie est concentrée autour de la fréquence zéro du signal.

Les coefficients $a_k$ du dénominateur de la fonction de transfert en z sont estimés en utilisant un critère de minimisation de la puissance du signal d'erreur *b(n)*.

$$J = \mathrm{E}\Big\{\big(\sum_{k=0}^{p} a_k x\big((n-k)T_{cor}\big)\big)^2\Big\} \ (avec\ a_0 = 1)$$

minimum

où E{·} désigne l'espérance. En dérivant *J* par rapport aux coefficients $a_j$, on aboutit à la solution :

$$a_j\, \mathrm{E}\big\{x(nT_{cor})x\big((n-j)T_{cor}\big)\big\} = -\mathrm{E}\big\{\sum_{k=1}^{p} a_j x\big((n-k)T_{cor}\big)x\big((n-j)T_{cor}\big)\big\}$$

Le système linéaire obtenu pour j = 1,2, ...., p peut être résolu de manière récursive sans inverser la matrice de corrélation. Une architecture simple est basée sur la mise en cascade de filtres d'ordre 1, dont la réponse en fréquence est la suivante :

$$H_k(z) = \frac{z - z_k}{z - p_k}$$

où

$$p_k = \alpha z_k = \alpha. exp\{j2\pi f_k T_{cor}\}, \alpha < 1.$$

L'argument du pole $p_k$ est relié à la fréquence $f_k$ du signal. Deux cellules en cascade permettent en particulier de détecter le signal LOS au voisinage de la fréquence 0, ainsi qu'un multi-trajet spéculaire de fréquence différente de celle du signal LOS :

$$\begin{cases} p_0 \rightarrow f_0 \\ p_1 \rightarrow f_1 \end{cases}$$

Lorsque la fréquence de commande des OCNs est correctement estimée, l'énergie du signal LOS doit rester localisée dans une bande autour de la fréquence nulle dont la largeur dépend du bruit de sortie du bloc qui réalise l'analyse en fréquence, l'écart-type de ce bruit étant relié au rapport $C/N_0$ du signal considéré.

$$|f_0| < k\frac{1}{\pi T_{cor}^2 \sqrt{C/N_0}}$$

Un détecteur de masquage qui exploite les résultats de cette analyse fréquentielle renseigne sur les points suivants :

○ structure à 1 pôle: présence du signal LOS,

○ structure à 2 pôles: présence du signal LOS et d'un multi-trajet spéculaire de fréquence $f_1 = f_0$ (énergie du signal multi-trajet localisée à la fréquence $f_1$).

Selon une mise en œuvre préférée du détecteur de masquage, celui-ci délivre 1) la puissance du signal à fréquence du signal LOS, 2) la fréquence du signal LOS, et 3), associé à un estimateur de la puissance totale, une mesure du rapport $C/(N_0 + N_I)$.

Les sorties du détecteur de masquages peuvent avantageusement être les suivantes :

○ Indicateur de qualité du signal LOS : exemples de valeurs : 0 (bonne qualité), 1 (signal LOS absent), 2 (signal LOS altéré) ;

○ fréquence du signal LOS;

○ variation de la fréquence du signal LOS (dérive de fréquence) ;

○ fréquence d'un NLOS spéculaire ; le rapport signal sur densité spectrale de bruit (prenant en compte les interférences)

L'indicateur de qualité du signal LOS est utilisé dans le processus de validation des mesures, ainsi que par le moniteur 38 pour la sélection du mode de fonctionnement (scalaire ou vectoriel) des boucles. Le moniteur 38 utilise la fréquence du signal LOS et la dérive de fréquence pour régler le temps de corrélation $T_{cor}$ et les bandes de bruit des boucles. Le rapport signal sur densité spectrale de bruit est utilisé dans la caractérisation des bruits qui affectent les mesures et les tests.

**Détection de multi-trajet**

En ce qui concerne la détection de multi-trajets, le détecteur de multi-trajet 40 utilise un discriminateur « Early-moins-Late », c.-à-d. la différence des sorties du corrélateur en avance et du corrélateur en retard.

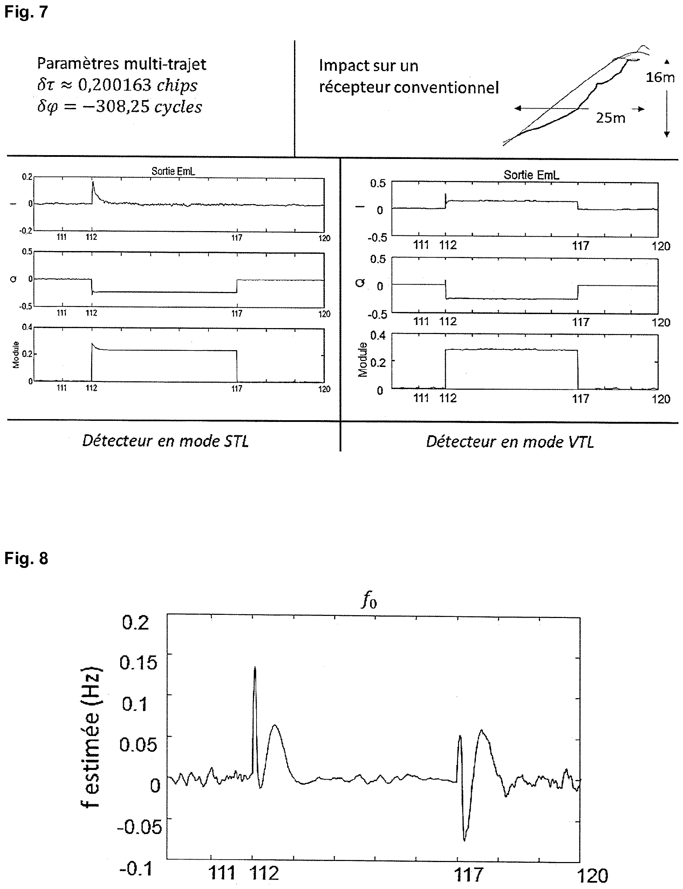

Le détecteur de multi-trajet utilise des tests différents selon le mode de poursuite (scalaire ou vectoriel) employé dans la boucle de poursuite de code. Les tests sont des tests d'hypothèse binaire et utilisent la mesure formée par la différence entre les points de corrélation Early (E) et Late (L). Les multi-trajets sont modélisés par une seule composante spéculaire pour les simulations dont les résultats sont produits sur les figures 8 à 11.

**Mode de poursuite scalaire**

Dans le cas du mode de poursuite scalaire et en absence de multi-trajet, la partie imaginaire du point EmL (différence entre le point de corrélation Early et Late), notée $Q_{EmL}$, est constituée d'un bruit formé par la différence des bruits des voies E (en avance) et L (en retard). Lorsqu'un multi-trajet apparaît, à ce bruit s'ajoute une amplitude dont l'expression dépend des paramètres propres au trajet direct et au multi-trajet. On propose de détecter les multi-trajets par le test d'hypothèse binaire suivant

$$\begin{cases} H_0: Q_{EmL}(k) = w_{QEmL}(k) \\ H_1: Q_{EmL}(k) = a + w_{QEmL}(k) \end{cases} \text{pour } k \, \epsilon \, \{1, ..., K\} + k_0$$

où k est l'indice de temps en sortie de corrélation, K est le nombre d'échantillons considérés en sortie de corrélation pour le test de détection à partir de l'instant $(1+k_0)$, a est l'amplitude due à la présence du multi-trajet, $w_{QEmL}$ est le bruit en absence de multi-trajet sur la partie imaginaire du point EmL. Le but du test est de décider entre l'hypothèse Ho (pas de confirmation de multi-trajet) et l'hypothèse $H_1$ (présence de multi-trajet). Le bruit $w_{QEmL}$ est centré Gaussien de variance ($\sigma^2$. Les sorties $Q_{EmL}(k)$ sont indépendantes entre elles.

En adoptant le principe du rapport de vraisemblance généralisé tout en considérant l'amplitude a et la puissance du bruit inconnue, le test revient à

o décider $H_1$ si $\dfrac{\bar{Q}^2}{\widehat{\sigma^2}} > \eta_1$ ou

∘ décider $H_0$ si $\dfrac{\bar{Q}^2}{\widehat{\sigma^2}} < \eta_1$ où $\bar{Q} = \dfrac{1}{K}\sum_{k=1}^{K} Q_{EmL}(k + k_0)$, $\widehat{\sigma^2} = \dfrac{1}{K}\sum_{k=1}^{K} \left(Q_{EmL}(k + k_0) - \bar{Q}\right)^2$

et $\eta_1$ est le seuil de détection. Ce dernier peut être calculé en fonction de la probabilité de fausse alarme que l'on s'autorise. Une fois ce seuil fixé, la probabilité de détection du multi-trajet peut à son tour être calculée.

Ce test est aveugle pour certaines valeurs du délai excédentaire du multi-trajet : en particulier, les multi-trajets en phase et opposition de phase avec le trajet direct ne peuvent pas être ainsi détectés, sauf pour des transitoires (apparition, disparition de multi-trajets). Ce test est donc utilisé, avec le bloc détecteur de masquage, pour commander le passage en mode vectoriel.

**Mode de poursuite vectorielle**

Dans le cas d'une architecture vectorielle et en absence de multi-trajet, le point EmL (qui est à valeur complexe) est constitué essentiellement d'un bruit. Lorsqu'un multi-trajet apparaît, à ce bruit s'ajoute une amplitude dont l'expression dépend des paramètres propres au trajet direct et au multi-trajet. On propose de détecter les multi-trajets par le test d'hypothèse binaire suivant :

$$\begin{cases} H_0: EmL(k) = w_{EmL}(k) \\ H_1: EmL(k) = a + w_{EmL}(k) \end{cases} \text{pour } k \in \{1, \dots, K\} + k_0$$

où a est une amplitude complexe (différente du cas scalaire), $W_{EmL}$ est le bruit complexe en absence de multi-trajet sur le point EmL. Le bruit $W_{EmL}$ est complexe centré Gaussien de variance $\sigma^2$ (différente du cas scalaire). Les sorties $EmL(k)$ sont indépendantes entre elles.

En adoptant le principe du rapport de vraisemblance généralisé tout en considérant l'amplitude a et la puissance du bruit inconnue, le test revient à

∘ décider $H_1$ si $\dfrac{|\overline{EmL}|^2}{\widehat{\sigma^2}} > \eta_2$

∘ décider $H_0$ si $\dfrac{|\overline{EmL}|^2}{\widehat{\sigma^2}} < \eta_2$ où $\overline{EmL} = \dfrac{1}{K}\sum_{k=1}^{K} EmL(k + k_0)$,

$\widehat{\sigma^2} = \dfrac{1}{K}\sum_{k=1}^{K} |EmL(k + k_0) - \overline{EmL}|^2$ et $\eta_2$ est le seuil de détection (différent du cas scalaire). Ce dernier peut être calculé en fonction de la probabilité de fausse alarme que l'on s'autorise. Une fois ce seuil fixé, la probabilité de détection du multi-trajet peut à son tour être calculée.

Contrairement au test de détection proposé en mode scalaire, le test proposé en mode vectoriel peut détecter les multi-trajets arrivant en phase ou en opposition de phase avec le trajet direct.

Le détecteur de multi-trajet 40 délivre en sortie un drapeau qui signale l'absence (plus précisément : la non-constatation) ou la présence d'un multi-trajet à la fréquence du signal LOS. Par ailleurs, les estimateurs du maximum de vraisemblance calculés pour établir ce test sont des indicateurs de qualité qui permettent de régler le bruit de mesure de retard du navigateur.

Le moniteur 38 surveille les délais de propagation $\tilde{\tau}_m$ et $\tilde{\tilde{\tau}}_m$, les fréquences Doppler $\tilde{f}_m$ et $\tilde{\tilde{f}}_m$ estimés par l'estimateur local 18 et l'estimateur global 36, respectivement, ainsi que les variances respectives. Le moniteur 38 surveille également les sorties du détecteur de masquage 42 et du détecteur de multi-trajet 40.

Le moniteur 38 sélectionne le mode (scalaire ou vectoriel) de la boucle de code et de la boucle de porteuse en fonction des sorties du détecteur de masquage 42 et du détecteur de multi-trajet 40. La commutation entre les deux modes est symbolisée sur la figure 2 par les blocs 44 et 46.

Si l'indicateur de qualité du signal LOS renseigne qu'il n'y a pas de signal LOS, la boucle de code et la boucle de porteuse sont placées en mode vectoriel. La configuration des boucles en mode vectoriel permet de maintenir en vie des canaux ne bénéficiant pas du signal LOS alors que le satellite correspondant est en principe disponible. La disponibilité du récepteur est ainsi améliorée.

En absence du signal LOS, le moniteur règle également le temps de corrélation $T_{cor}$ à une valeur nominale et relâche la bande de bruit des boucles. Les estimations transmises au navigateur 34 sont estampillées comme étant corrompues afin que le navigateur 34 ne les utilise pas pour la solution de navigation et ne contamine les autres canaux. Le navigateur 34 peut également être configuré de sorte à appliquer à chaque mesure ou estimation en entrée une pondération dépendante de la précision. Comme la bande de bruit est relâchée, une mesure ou estimation corrompue est affectée d'un bruit de mesure de valeur très élevée (voire infinie $(\sigma^2_{\hat{\tau}_m} = \infty$ ou (et) $\sigma^2_{\hat{f}_m} = \infty))$. Une telle mesure ne contribuera pas ou seulement avec une pondération très faible à la solution de navigation lorsque l'algorithme de localisation.

Si l'indicateur de qualité de signal LOS indique que la qualité du signal LOS est bonne et si le drapeau multi-trajet n'est pas levé, le moniteur 38 configure les boucles de code et de phase en mode scalaire. Le temps de corrélation $T_{cor}$ et les bandes de bruits sont réglés en fonction de la fréquence du signal LOS et de la dérive de la fréquence du signal LOS. Les mesures ou estimations transmises au navigateur 34 sont validées et le bruit de mesure est ajusté en fonction du paramètre rapport signal sur densité spectrale de bruit (et du temps de corrélation et bandes de bruit). Cette configuration rend autonome un canal qui bénéficie d'un signal GNSS de bonne qualité. Ce canal ne subit pas de dégradations que pourraient engendrer des mesures corrompues délivrées au navigateur.

Si l'indicateur de qualité de signal LOS indique que la qualité du signal LOS est bonne et si le drapeau multi-trajet est levé, le moniteur 38 configure la boucle de code en mode vectoriel alors qu'il maintient la boucle de porteuse en mode scalaire. Cette situation peut découler de la présence d'un multi-trajet à la fréquence du signal LOS. La pseudo-distance délivrée par l'estimateur local 18 est estampillée comme corrompue et n'entre donc pas dans la solution de navigation du navigateur 34. Le temps de corrélation $T_{cor}$ et les bandes de bruits sont réglés en fonction de la fréquence du signal LOS et de la dérive de la fréquence du signal LOS. La delta-distance estimée par l'estimateur local 18 (qui ne se fonde pas sur les mesures de code mais uniquement sur les mesures de phase) est validée et le bruit sur cette mesure est déduit du paramètre rapport signal sur densité spectrale de bruit. Cette configuration permet d'améliorer la qualité du test qui délivre le drapeau multi-trajet. La delta-distance rentre dans les calculs du navigateur 34 et permet d'améliorer les performances de celui-ci sur le court-terme.

En pratique, une estimation du rapport C/No permet d'ajuster le bruit (bruit d'estimation) sur les mesures de pseudo-distance et de fréquence Doppler, exploitées par le navigateur. Lorsque l'algorithme de localisation du navigateur utilise un filtre de Kalman étendu ou un filtre moindre carré pondéré, cette approche permet de pondérer chaque mesure en fonction de sa qualité, et donc de réduire l'impact d'une mesure fortement bruitée sur la position et la vitesse du récepteur estimées.

Le moniteur 38 maintient une boucle de poursuite en mode vectoriel tant que la perturbation persiste. Un retour au mode scalaire est autorisée dès que la perturbation (absence de signal LOS et/ou présence de multi-trajet) n'est plus constatée par les détecteurs 40 et 42.

### Exemple de scénario

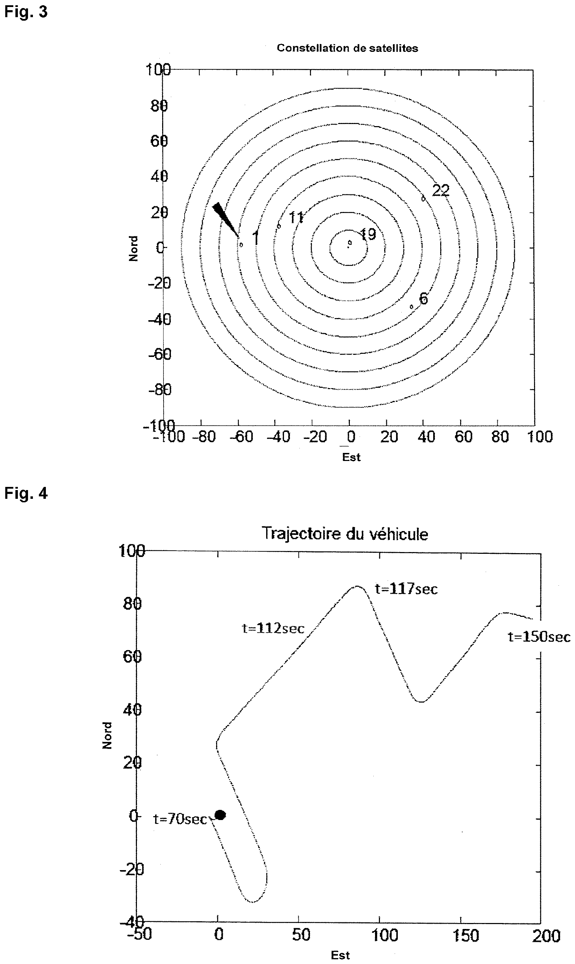

On considère une constellation de 5 satellites (voir figure 3), alors que le récepteur équipe une voiture se déplaçant sur la trajectoire illustrée sur la figure 4. Des perturbations du signal provenant du satellite '1', sur l'intervalle de temps *112sec* < t < *117sec,* ont été simulées.

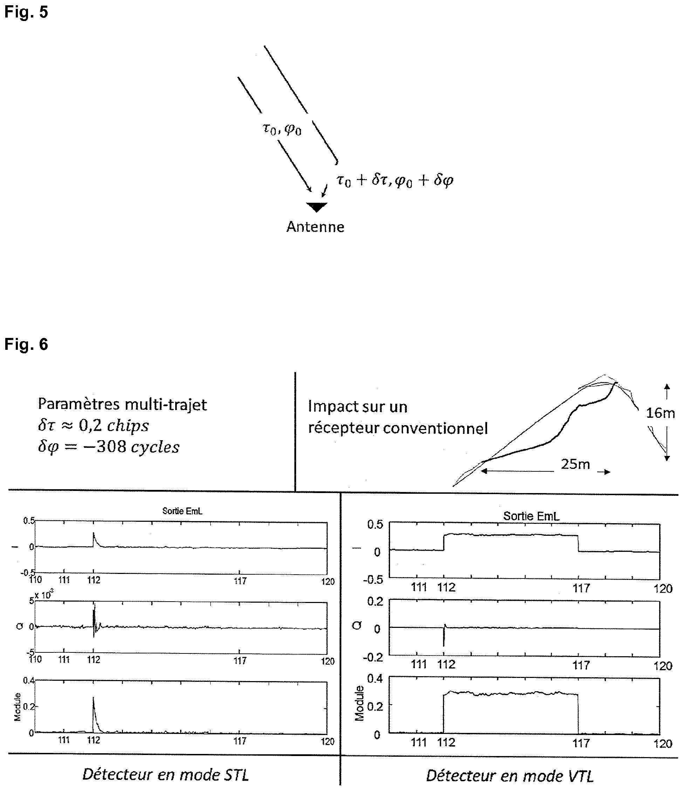

La figure 5 montre un multi-trajet à la fréquence du signal LOS, qui résulte d'une réflexion sur un bâtiment alors que le récepteur est immobile ou se déplace parallèlement au bâtiment. Ce type de multi-trajet ne peut être filtré et affecte fortement le récepteur. Il peut être modélisé par une seule composante spéculaire.

Lorsque la mesure de pseudo-distance, délivrée par le canal de poursuite associé à ce satellite, est utilisée par l'algorithme du navigateur, la position estimée est affectée d'une erreur qui dépend des valeurs relatives du délai ($\delta\tau$) et de la phase ($\delta\varphi$).

Détecter cette erreur est nécessaire pour éviter qu'elle ne pèse sur la solution de navigation. La détection de ce multi-trajet utilise le détecteur de multi-trajet qui opère dans le domaine du délai. Pour comprendre les mécanismes de détection présentés ci-avant, il convient d'observer le point EmL traité par ce détecteur lorsque la boucle de poursuite de code est placée en mode scalaire et lorsqu'elle est placée en mode vectoriel.

Les figures 6 et 7 montrent l'impact d'un multi-trajet sur les sorties en phase, (*I*), et en quadrature, (Q), du point EmL d'un récepteur en mode scalaire (STL) ou vectoriel (VTL), respectivement, pour différentes valeurs de la différence de phase $\delta\varphi$, l'écart $\delta\tau$ restant proche de 0.2 bribes (en anglais « chips »). Les figures montrent également le module

$$\left(\sqrt{I^2 + Q^2}\right)$$ du point EmL. La figure 6 montre le cas d'un multi-trajet en phase avec le signal LOS et la figure 7 montre le cas d'un multi-trajet en quadrature de phase avec le signal LOS. Elles mettent en évidence les points suivants :

○ En mode vectoriel, le module du point EmL renseigne sur la présence d'un multi-trajet quelle que soit la différence de phase $\delta\varphi$. Surveiller le point EML (complexe) ou son module permet donc de détecter efficacement la présence ou l'absence d'un multi-trajet sur un canal placé en mode de poursuite vectorielle.

○ En mode scalaire, la puissance d'un test d'hypothèse réalisé sur la voie en quadrature du point EmL dépend de la différence de phase $\delta\varphi$, la performance étant optimale si $\delta\varphi$ est de l'ordre de 0.25 *cycle,* lorsque le multi-trajet est en quadrature. Il faut rappeler que pour les multi-trajets les plus impactant, lorsque le récepteur est à l'arrêt, cette différence de phase ne varie pas dans le temps, la position du récepteur impactant la performance du test.

○ En mode scalaire, le point EmL est affecté d'un phénomène transitoire, quelle que soit la différence de phase $\delta\varphi$, permettant de détecter l'apparition d'un multi-trajet.

La figure 8 montre l'estimée de la fréquence du signal LOS délivrée par le détecteur de masquage. On remarque la variation de fréquence à l'apparition et à la disparition du multi-trajet des figures 6 et 7.

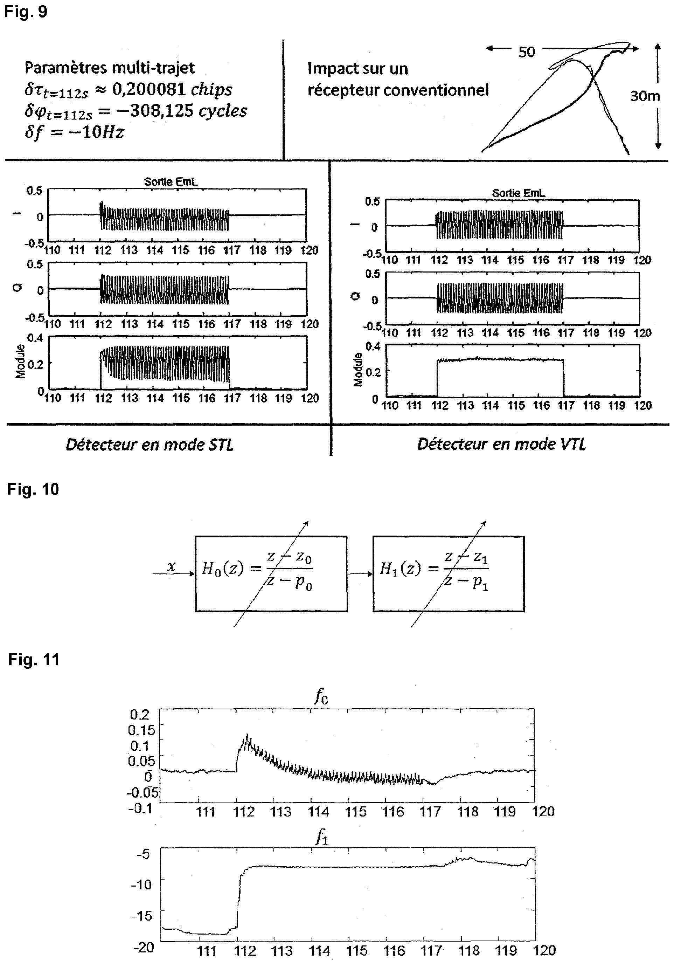

La figure 9 montre l'impact d'un multi-trajet, qui n'est pas à la fréquence du LOS, sur le point EmL d'un récepteur en mode scalaire (STL) ou vectoriel (VTL), respectivement. Un tel multi-trajet, qui peut résulter d'une réflexion sur un bâtiment alors que le récepteur ne se déplace pas parallèlement au bâtiment, affecte le récepteur s'il n'est pas filtré par le canal de poursuite.

En mode scalaire, la composante en quadrature du point EmL oscille au rythme de la variation de la différence de phase $\delta\varphi$, c'est-à-dire de la fréquence relative du multi-trajet. En mode vectoriel, l'analyse du module du point EmL permet au détecteur de discerner la présence de ce multi-trajet, de la même manière que précédemment (multi-trajet à la fréquence du LOS).

Par ailleurs, l'analyse en fréquence réalisée par le détecteur de masquage, en mode vectoriel, permet de détecter la présence d'un tel-multi-trajet et la fréquence de ce multi-trajet.

La figure 10 illustre schématiquement un détecteur de masquage comprenant deux filtres adaptatifs d'ordre 1 (à un zéro et à un pôle) en cascade. Sur la figure 11, on voit l'impact du multi-trajet de la figure 9 sur ce filtre. Il affecte la première cellule qui estime la fréquence du signal LOS. La fréquence du multi-trajet est estimée par la deuxième cellule.

La connaissance de cette fréquence permet d'agir sur le temps de corrélation et les bandes de bruit du canal de poursuite, en particulier pour une poursuite vectorielle. Toutefois il existe des limitations qui sont à relier 1) à la qualité du signal LOS (rapport $C/N_0$), 2) à la précision sur la vitesse estimée par le navigateur qui impacte le paramètre $\sigma^2_{\hat{f}_m}$, et 3) à la qualité de l'oscillateur.

La perte du signal LOS d'un satellite a comme conséquence que les boucles du canal de poursuite concerné décrochent (en mode scalaire). Lorsque le signal réapparait, ce décrochage nécessiterait, dans un récepteur conventionnel, une phase de réacquisition plus ou moins longue de ce signal. Selon le mode de réalisation le plus avantageux de l'invention, le récepteur peut individuellement passer ses canaux de poursuite en mode vectoriel en cas de perte du signal LOS correspondant. Le passage en mode vectoriel permet notamment de faire un pont dans des environnements où alternent des zones de visibilité et de masquage, ce qui améliore fortement la disponibilité d'un satellite au niveau du navigateur.

La simplicité de l'approche inventive, qui ne nécessite pas de ressources matérielles importantes, sera appréciée.

Alors que des modes de réalisation particuliers viennent d'être décrits en détail, l'homme du métier appréciera que diverses modifications et alternatives à ceux-là puissent être développées dans le cadre des revendications annexées. Par conséquent, les agencements et/ou procédés spécifiques décrits ci-dedans sont censés être donnés uniquement à titre d'illustration, sans intention de limiter la portée de l'invention.

## Revendications

1. Récepteur de signaux de radionavigation (figures 1 et 2), comprenant un étage RF (10) pour produire un signal entrant numérique;
plusieurs canaux de poursuite (figure 2) configurés pour fournir des mesures relatives à un signal de radionavigation, les canaux comprenant chacun respectivement:

un générateur de répliques de code (32) configuré pour produire des répliques du code du signal de radionavigation poursuivi par le canal respectif ;
un module de corrélation (14) configuré pour produire des corrélations entre le signal entrant et les répliques de code ;
une boucle à verrouillage de retard de code de type scalaire (18, 28, 30) configurée pour piloter le générateur de répliques de code en vue de synchroniser les répliques de code avec le signal entrant ;

un navigateur (34) alimenté par les canaux de poursuite, configuré pour calculer une solution de navigation sur la base des mesures réalisées par les canaux de poursuite ;
une boucle à verrouillage de retard de code de type vectoriel (36, 30), alimentée par le navigateur et configurée pour piloter les générateurs de répliques de code (32) en vue de synchroniser les répliques de code avec le signal entrant ; et
**caractérisé par**
un moniteur (38) configuré pour commuter individuellement les canaux de poursuite entre la boucle à verrouillage de retard de code de type vectoriel et la boucle à verrouillage de retard de code de type scalaire respective ;
chaque canal comprenant un détecteur de multi-trajet (40) et le moniteur (38) étant configuré pour commuter le canal de poursuite en fonction du résultat du détecteur de multi-trajet.

2. Récepteur de signaux de radionavigation selon la revendication 1, **caractérisé en ce que** le détecteur de multi-trajet (40) est configuré pour décider entre la présence et l'absence de multi-trajet sur la base d'un ou de plusieurs tests statistiques.

3. Récepteur de signaux de radionavigation selon la revendication 2, **caractérisé en ce que** le détecteur de multi-trajet (40) est configuré pour décider entre la présence et l'absence de multi-trajet sur la base d'un premier test statistique lorsque le canal de poursuite respectif est commuté sur la boucle à verrouillage de retard de code de type scalaire et sur la base d'un second test statistique lorsque le canal de poursuite respectif est commuté sur la boucle à verrouillage de retard de code de type vectoriel.

4. Récepteur de signaux de radionavigation selon la revendication 3, **caractérisé en ce que**, selon le premier test statistique, la présence de multi-trajet est détectée si :

$$\frac{\bar{Q}^2}{\widehat{\sigma_1^2}} > \eta_1$$

où $Q$ est la valeur moyenne de la différence entre la voie en quadrature en avance et la voie en quadrature en retard calculée pour un temps d'observation, $\widehat{\sigma_1^2}$ est une estimée de la variance de ladite différence pour ce temps d'observation et $\eta_1$ est le seuil de détection du premier test.

5. Récepteur de signaux de radionavigation selon la revendication 3 ou 4, **caractérisé en ce que**, selon le second test statistique, la présence de multi-trajet est détectée si :

$$\frac{\overline{|EmL|}^2}{\widehat{\sigma_2^2}} > \eta_2$$

où $EmL$ est la valeur moyenne de la différence entre la voie complexe en avance et la voie complexe en retard calculée pour un temps d'observation, $\widehat{\sigma_2^2}$ est une estimée de la variance de cette différence pour ce temps d'observation et $\eta_2$ est le seuil de détection du second test.

6. Récepteur de signaux de radionavigation selon l'une quelconque des revendications 1 à 5, **caractérisé en ce que** chaque canal comprend un détecteur de masquage (42) pour détecter si le signal poursuivi par le canal respectif est un signal LOS.

7. Récepteur de signaux de radionavigation selon la revendication 6, **caractérisé en ce que** le moniteur (38) est configuré pour commuter individuellement les canaux de poursuite entre la boucle à verrouillage de retard de code de type vectoriel et la boucle à verrouillage de retard de code de type scalaire respective en fonction du résultat de détection du détecteur de masquage (42).

8. Récepteur de signaux de radionavigation selon l'une quelconque des revendications 1 à 7, **caractérisé en ce que** chaque canal de poursuite comprend en outre, un générateur de porteuse locale (24) configuré pour produire une porteuse locale et pour injecter celle-ci dans le module de corrélation (14) ; et une boucle à verrouillage de phase de porteuse (18, 20, 22) configurée pour piloter le générateur de porteuse locale en vue de synchroniser la porteuse locale avec le signal de radionavigation.

9. Récepteur de signaux de radionavigation selon les revendications 6 et 8, **caractérisé en ce que** la boucle de verrouillage de phase est configurée de sorte à opérer en mode autonome si le résultat de détection du détecteur de masquage (42) indique que le signal poursuivi par le canal respectif est un signal LOS et en mode de fréquence aidée par le navigateur (34) si le résultat de détection du détecteur de masquage (42) indique que le signal poursuivi par le canal respectif est un signal non LOS.

**Patentansprüche**

1. Funknavigation-Signalempfänger (Figuren 1 und 2), umfassend eine HF-Stufe (10) zum Erzeugen eines numerischen Eingangssignals;
mehrere Verfolgungskanäle (Figur 2), konfiguriert zum Bereitstellen von Messungen, die ein Funknavigationssignal betreffen, wobei die Kanäle jeweils umfassen:

einen Codereplikationsgenerator (32), konfiguriert zum Erzeugen von Coderepliken des Funknavigationssignals, das durch den jeweiligen Kanal verfolgt wurde;
ein Korrelationsmodul (14), konfiguriert zum Erzeugen von Korrelationen zwischen dem Eingangssignal und den Coderepliken;
eine Codeverzögerungs-Verriegelungsschleife vom Skalartyp (18, 28, 30), konfiguriert zum Steuern des Codereplikationsgenerators zwecks Synchronisieren der Coderepliken mit dem Eingangssignal;

einen durch die Verfolgungskanäle versorgten Navigator (34), konfiguriert zum Berechnen einer Navigationslösung auf der Basis von durch die Verfolgungskanäle ausgeführten Messungen;
eine Codeverzögerungs-Verriegelungsschleife vom Vektortyp (36, 30), versorgt durch den Navigator und konfiguriert zum Steuern des Codereplikationsgenerators (32) zwecks Synchronisieren der Coderepliken mit dem Eingangssignal; und
**gekennzeichnet durch**
ein Überwachungsgerät (38), konfiguriert zum individuellen Umschalten der Verfolgungskanäle zwischen der Codeverzögerungs-Verriegelungsschleife vom Vektortyp und der entsprechenden Codeverzögerungs-Verriegelungsschleife vom Skalartyp;
wobei jeder Kanal einen Mehrwegdetektor (40) umfasst und das Überwachungsgerät (38) zum Umschalten des Verfolgungskanals in Abhängigkeit des Resultats des Mehrwegdetektors konfiguriert ist.

2. Funknavigation-Signalempfänger nach Anspruch 1, **dadurch gekennzeichnet, dass** der Mehrwegdetektor (40) zum Entscheiden zwischen der Anwesenheit und der Abwesenheit des Mehrwegs auf der Basis eines oder mehrerer statistischer Prüfungen konfiguriert ist.

3. Funknavigation-Signalempfänger nach Anspruch 2, **dadurch gekennzeichnet, dass** der Mehrwegdetektor (40) zum Entscheiden zwischen der Anwesenheit und der Abwesenheit des Mehrwegs auf der Basis einer ersten statistischen Prüfung, wenn der jeweilige Verfolgungskanal auf die Codeverzögerungs-Verriegelungsschleife vom Skalartyp geschaltet ist, und auf der Basis einer zweiten statistischen Prüfung, wenn der jeweilige Verfolgungskanal auf die Codeverzögerungs-Verriegelungsschleife vom Vektortyp geschaltet ist, konfiguriert ist.

4. Funknavigation-Signalempfänger nach Anspruch 3, **dadurch gekennzeichnet, dass** gemäß der ersten statistischen Prüfung die Anwesenheit des Mehrwegs detektiert wird, wenn:

$$\frac{\overline{Q}^2}{\widehat{\sigma_1^2}} > \eta_1$$

wobei $\overline{Q}$ der Mittelwert der für einen Beobachtungszeitraum berechneten Differenz zwischen dem Voraus-Quadraturpfad und dem Verzug-Quadraturpfad ist, $\widehat{\sigma_1^2}$ eine Abschätzung der Varianz der Differenz für diesen Beobachtungszeitpunkt ist und $\eta_1$ der Detektions-Grenzwert der ersten Prüfung ist.

5. Funknavigation-Signalempfänger nach Anspruch 3 oder 4, **dadurch gekennzeichnet, dass** gemäß der zweiten statistischen Prüfung die Anwesenheit des Mehrwegs detektiert wird, wenn:

$$\frac{\overline{|EmL|}^2}{\widehat{\sigma_2^2}} > \eta_2$$

wobei $\overline{EmL}$ der Mittelwert der für einen Beobachtungszeitpunkt berechneten Differenz zwischen dem komplexen Voraus-Pfad und dem komplexen Verzug-Pfad ist, $\widehat{\sigma_2^2}$ eine Abschätzung der Varianz dieser Differenz für diesen Beobachtungszeitpunkt ist und $\eta_2$ der Detektions-Grenzwert der zweiten Prüfung ist.

6. Funknavigation-Signalempfänger nach einem der Ansprüche 1 bis 5, **dadurch gekennzeichnet, dass** jeder Kanal einen Maskierungsdetektor (42) zum Detektieren, ob das durch den jeweiligen Kanal verfolgte Signal ein LOS-Signal ist, umfasst.

7. Funknavigation-Signalempfänger nach Anspruch 6, **dadurch gekennzeichnet, dass** das Überwachungsgerät (38) konfiguriert ist zum individuellen Umschalten der Verfolgungskanäle zwischen der Codeverzögerungs-Verriegelungsschleife vom Vektortyp und der entsprechenden Codeverzögerungs-Verriegelungsschleife vom Skalartyp, in Abhängigkeit des Resultats der Detektion des Maskierungsdetektors (42).

8. Funknavigation-Signalempfänger nach einem der Ansprüche 1 bis 7, **dadurch gekennzeichnet, dass** jeder Verfolgungskanal des Weiteren einen lokalen Träger-Generator (24), konfiguriert zum Erzeugen eines lokalen Trägers und zum Injizieren dessen in das Korrelationsmodul (14); und eine Verriegelungsschleife der Trägerphase (18, 20, 22), konfiguriert zum Steuern des lokalen Träger-Generators zwecks Synchronisieren des lokalen Trägers mit dem Funknavigationssignal umfasst.

9. Funknavigation-Signalempfänger nach den Ansprüchen 6 und 8, **dadurch gekennzeichnet, dass** die Phasenverriegelungsschleife derart konfiguriert ist, um in autonomen Modus, wenn das Resultat der Detektion des Maskierungsdetektors (42) anzeigt, dass das durch den jeweiligen Kanal verfolgte Signal ein LOS-Signal ist, und im durch den Navigator (34) unterstützten Frequenzmodus zu arbeiten, wenn das Resultat der Detektion des Maskierungsdetektor (42) anzeigt, dass das durch den jeweiligen Kanal verfolgte Signal ein Nicht-LOS-Signal ist.

**Claims**

1. A radio navigation signal receiver (Figures 1 and 2), comprising a RF stage (10) for producing a digital input signal; several tracking channels (Figure 2) configured to provide measurements relating to a radio navigation signal, the channels each comprising respectively:

   a code replica generator (32) configured to produce code replicas of the radio navigation signal tracked by the respective channel;
   a correlation module (14) configured to produce correlations between the incoming signal and the code replicas;
   a code delay locked loop of the scalar type (18, 28, 30) configured to drive the code replica generator in order to synchronize the code replicas with the input signal;

a navigator (34) supplied by the tracking channels, configured to calculate a navigation solution based on the measurements made by the tracking channels;

a code delay locked loop of the vector type (36, 30), supplied by the navigator and configured to drive the code replica generators (32) in order to synchronize the code replicas with the input signal; and

**characterized by**

a monitor (38) configured to individually switch the tracking channels between the code delay locked loop of the vector type and the respective code delay locked loop of the scalar type;

each channel comprising a multipath detector (40) and the monitor (38) being configured to switch the tracking channel depending on the result of the multipath detector.

2. The radio navigation signal receiver according to claim 1, **characterized in that** the multipath detector (40) is configured to decide between the presence and absence of multipath on the basis of one or more statistical tests.

3. The radio navigation signal receiver according to claim 2, **characterized in that** the multipath detector (40) is configured to decide between the presence and the absence of multipath based on a first statistical test when the respective tracking channel is switched to the code delay locked loop of the scalar type and based on a second statistical test when the respective tracking channel is switched to the code delay locked loop of the vector type.

4. The radio navigation signal receiver according to claim 3, **characterized in that**, according to the first statistical test, the presence of multi-path is detected if:

$$\frac{\bar{Q}^2}{\widehat{\sigma_1^2}} > \eta_1$$

where $\overline{Q}$ is the mean value of the difference between the advanced quadrature channel and the delayed quadrature channel calculated for an observation time, $\widehat{\sigma_1^2}$ is an estimate of the variance of said difference for that observation time and $\eta_1$ is the detection threshold of the first test.

5. The radio navigation signal receiver according to claim 3 or 4, **characterized in that**, according to the second statistical test, the presence of multi-path is detected if:

$$\frac{\overline{|EmL|}^2}{\widehat{\sigma_2^2}} > \eta_2$$

where $\overline{EmL}$ is the average value of the difference between the advanced complex channel and the delayed complex channel calculated for an observation time, $\widehat{\sigma_2^2}$ is an estimate of the variance of this difference for this observation time and $\eta_2$ is the detection threshold of the second test.

6. The radio navigation signal receiver according to any one of claims 1 to 5, **characterized in that** each channel comprises a masking detector (42) for detecting whether the signal tracked by the respective channel is an LOS signal.

7. The radio navigation signal receiver according to claim 6, **characterized in that** the monitor (38) is configured to individually switch the tracking channels between the code delay locked loop of the vector type and the respective code delay locked loop of the scalar type depending on the detection result of the masking detector (42).

8. The radio navigation signal receiver according to any one of claims 1 to 7, **characterized in that** each tracking channel further comprises, a local carrier generator (24) configured to produce a local carrier and to inject the latter in the correlation module (14); and a carrier phase locked loop (18, 20, 22) configured to drive the local carrier generator in order to synchronize the local carrier with the radio navigation signal.

9.  The radio navigation signal receiver according to claims 6 and 8, **characterized in that** the phase locked loop is configured so as to operate in autonomous mode if the detection result of the masking detector (42) indicates that the signal tracked by the respective channel is an LOS signal and in frequency mode assisted by the navigator (34) if the detection result of the masking detector (42) indicates that the signal tracked by the respective channel is a non-LOS signal.

**Fig. 1**

**Fig. 2**

EP 3 081 962 B1

**Fig. 3**

Constellation de satellites

**Fig. 4**

Trajectoire du véhicule

**Fig. 5**

$\tau_0, \varphi_0$

$\tau_0 + \delta\tau, \varphi_0 + \delta\varphi$

Antenne

**Fig. 6**

Paramètres multi-trajet
$\delta\tau \approx 0.2\ chips$
$\delta\varphi = -308\ cycles$

Impact sur un
récepteur conventionnel

16m

25m

*Détecteur en mode STL*

*Détecteur en mode VTL*

**Fig. 7**

Paramètres multi-trajet
$\delta\tau \approx 0,200163\ chips$
$\delta\varphi = -308,25\ cycles$

Impact sur un
récepteur conventionnel

16m

25m

*Détecteur en mode STL*

*Détecteur en mode VTL*

**Fig. 8**

**Fig. 9**

Paramètres multi-trajet
$\delta\tau_{t=112s} \approx 0,200081\ chips$
$\delta\varphi_{t=112s} = -308,125\ cycles$
$\delta f = -10Hz$

Impact sur un récepteur conventionnel

50 — 30m

Détecteur en mode STL

Détecteur en mode VTL

**Fig. 10**

$$x \longrightarrow \boxed{H_0(z) = \frac{z - z_0}{z - p_0}} \longrightarrow \boxed{H_1(z) = \frac{z - z_1}{z - p_1}} \longrightarrow$$

**Fig. 11**

$f_0$

$f_1$

## RÉFÉRENCES CITÉES DANS LA DESCRIPTION

**Documents brevets cités dans la description**

- US 5917445 A

- CN 103809191

**Littérature non-brevet citée dans la description**

- **M. IRSIGLER ; G. W. HEIN.** Development of a Real-Time Multipath Monitor Based on Multi-Correlator Observations. *Proceedings of the 18th International Technical Meeting of the Satellite Division of the Institute of Navigation, ION GNSS,* 2005
- **O. M. MUBARAK ; A. G. DEMPSTER.** Exclusion of Multipath-Affected Satellites Using Early Late Phase. *Journal of Global Positioning System,* 2010, vol. 9 (2), 145-155
- **MATTHEW LASHLEY et al.** « Vector Delay Lock Loops. *InsideGNSS,* Septembre 2012, 28-34

- **MATTHEW LASHLEY ; DAVID M. BEVLY.** Comparison in the Performance of the Vector Delay/Frequency Lock Loop and Equivalent Scalar Tracking Loops in Dense Foliage and Urban Canyon. *Proceedings of the 24th International Technical Meeting of The Satellite Division of the Institute of Navigation (ION GNSS 2011),* Septembre 2011, 1786-1803
- **C. FERNANDEZ-PRADES et al.** Assisted GNSS in LTE-Advanced Networks and its Application to Vector Tracking Loops. *GNSS 2012 - Proceedings of the 25th international meeting of the satellite division of the institute of navigation (ION GNSS 2012),* 21 Septembre 2012, 1462-1476
- **V. CALMETTES et al.** Techniques d'adoucissement de spectre pour récepteur à spectre étalé. *18° Colloque sur le traitement du signal et des images,* 2001, 1152-1155